# EUROPEAN PATENT APPLICATION

(11) **EP 2 784 991 A1**
(43) Date of publication of application: **01.10.2014**
(21) Application number: 13161817.5
(22) Date of filing: 28.03.2013
(51) Int. Cl.: H04L 12/70

(54) **Method and apparatus for congestion mitigation**

(71) Applicant: NTT DoCoMo, Inc., Tokyo (JP)
(72) Inventor: Thakolsri, Srisakul, 80687 Munich (DE); Staehle, Dirk, 80687 Munich (DE); Shehada, Mohammed, 80687 Munich (DE)
(74) Representative: Betten & Resch

(57) **Abstract**

A method for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, and further a policy and charging rules function (PCRF) module which is separate from said PGW, said method comprising the steps of: detecting a congestion status in said RAN, providing by said PCRF module one or more congestion mitigation policies which respectively define a plurality of congestion mitigation measures to execute in case of a congestion to said PCEF, receiving and storing said one or more congestion mitigation policies at the PCEF, wherein the method is characterized by notifying said PCEF about said congestion status by said RAN, receiving said congestion status notification at said PCEF, wherein said one or more congestion mitigation policies provided to the PCEF by said PCRF module comprising congestion mitigation measures, said method further comprising: determining based on said plurality of congestion mitigation measures by said PCEF a congestion mitigation measure according to said congestion status notification and executing said determined congestion mitigation measure to thereby enforce said one or more congestion mitigation policies.

## Description

### FIELD OF INVENTION

The present invention relates to a method and an apparatus for controlling and mitigating congestion in a mobile network by applying different traffic handling policies for different congestion situations.

### BACKGROUND OF THE INVENTION

Mobile networks experience an enormous growth in data traffic. This is first due to the increasing number of smartphones and tablets with improved display and computing capabilities, second due to the tariff structure with flat rate subscriptions and increasing traffic volumes, third due to an increasing number of customers using the mobile Internet access also at home, fourth due to the success of the app markets with an increasing number of apps for smartphones and tablets, and fifth due to the increasing demand for mobile video traffic. These developments lead to user plane congestion in current mobile networks. User plane congestion means that the traffic demand exceeds the available network capacity for a longer period of time and leads to a degradation of user experience. Investments of operators by network densification or improved transmission technologies cannot economically scale with peak traffic demands such that user plane congestion cannot be avoided.

Appropriate measures to deal with user plane congestion are for example traffic prioritization, bandwidth limitation, traffic gating, or traffic reduction.
- Traffic prioritization means that packets of a certain traffic type are assigned to different priority classes and packets with higher priority experience an improved treatment. The decision on a priority class and the enforcement of the priority by a differentiated treatment of the packets may be at different places in the network. For instance in a 3GPP network, the Policy Control and Charging/Quality of Service (PCC/QoS) framework provides traffic prioritization on the bearer level. A bearer is associated with a QoS Class Indicator (QCI) value that may be interpreted by the scheduler of the base station (eNodeB, eNB) in the Radio Access Network (RAN) as priority. The Policy and Charging Enforcement Function (PCEF) is located at the Packet Data Network Gateway (PGW) in the core network (CN) of the 3GPP network and assigns traffic to different bearers and thus has the function to decide on the priority class of the traffic.
- Bandwidth limitation means that the throughput of a certain traffic type is limited by a traffic shaper to a certain maximum bit rate.
   For instance in a 3GPP network, the Maximum Bit Rate (MBR) defines the maximum bit rate for a Guaranteed Bit Rate (GBR) bearer and the Aggregated Maximum Bit Rate (AMBR) defines the maximum bit rate for the sum of all traffic on the non-GBR bearers of a user.
- Traffic gating means that packets of a certain traffic type are blocked.
- Traffic reduction means that the volume of the traffic is reduced. While bandwidth limitation changes the bandwidth with which application content is transported, traffic reduction actually changes the application content. Examples for traffic reduction are image compression or video transcoding. Traffic reduction may also be achieved by for example modifying request for videos as in the context of for Dynamic Adaptive Streaming for HTTP (DASH).

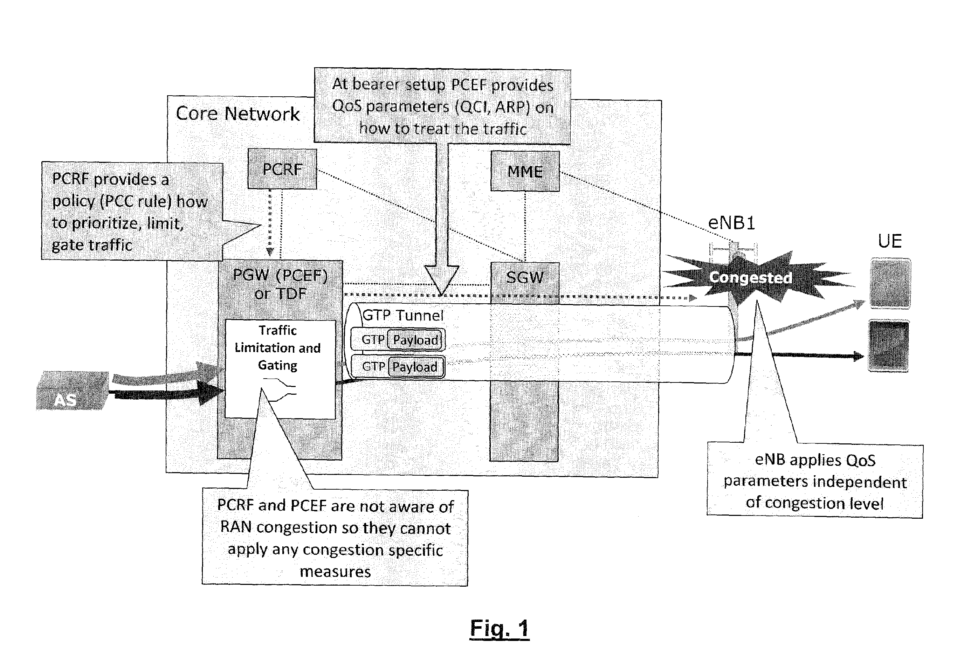

The PCC/QoS framework in the current 3GPP standard supports traffic limitation, traffic gating and traffic prioritization. The policy and charging rules function (PCRF) is the entity in a 3GPP network that controls the traffic policy (prioritization, gating, limitation) to be enforced in the PCEF and communicates this policy using a PCC rule. The policy decision considers criteria like subscription information, service information, and usage statistics. The QoS parameters carried in the PCC rule are associated with an IP Connectivity Access Network (IP-CAN) bearer and made aware to the eNB by establishing a new or modifying an existing IP-CAN bearer. Figure 1 illustrates the principles of operation of the PCC/QoS architecture of a 3GPP network.

The QoS parameters exchanged between PCRF and PCEF also contain the AMBR. The AMBR does not relate to a single bearer but to all non-GBR bearers of a user.

Additionally, the PCRF communicates Application Detection and Control (ADC) rules to either the ADC function located in the PCEF or to the Traffic Detection Function (TDF) which is a stand-alone entity for traffic detection e.g. based on Deep Packet Inspection (DPI). An ADC rule specifies that a certain application should be detected, that the detection should be signaled to the PCRF, and that the application should be blocked or the traffic rate of this application should be limited according to an MBR.

The decision on policies for traffic prioritization, bandwidth limitation, or gating is taken in the PCRF and signaled to PCEF or TDF independent of the user plane congestion situation in the RAN. This means that the same bandwidth limitations apply whether a user is in a heavily congested cell or in a lightly loaded cell. Also, the decisions which applications to block or which applications to prioritize are taken independent on the congestion situation in the RAN.

Applying different policies for different congestion situations in the RAN allows an operator to better realize the desired rate and performance plans differentiating user subscription levels, applications, user behavior, etc. For example, an operator might block a certain traffic intensive application like video streaming for best effort users during heavy congestion, limit it to a certain bandwidth for medium congestion, and put no limit on it when there is no congestion.

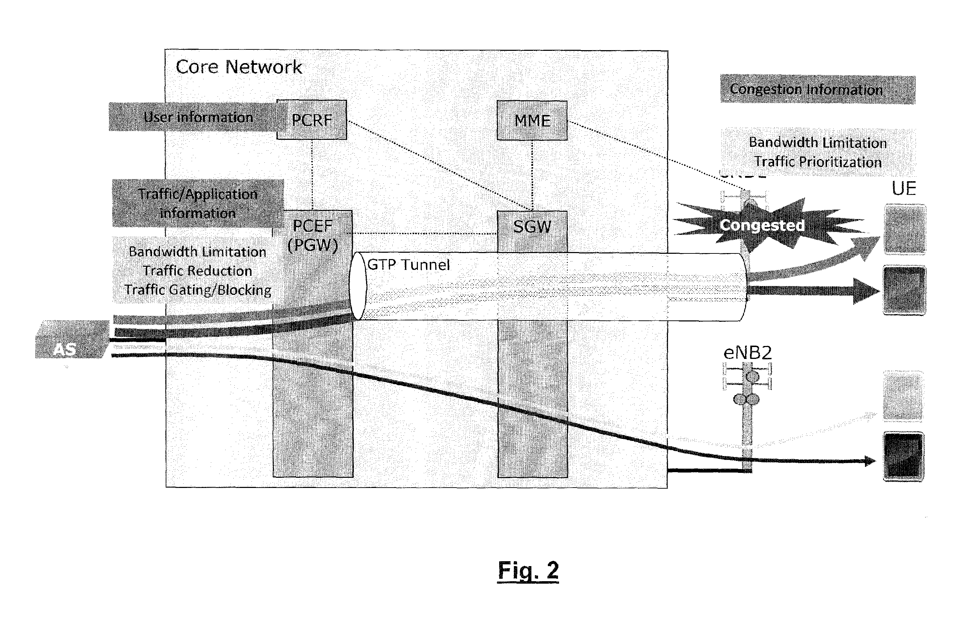

The current 3GPP standard does not allow policies that take into account information about the current RAN congestion situation. Figure 2 illustrates this problem by showing the location of functionalities and information in a 3GPP network. In the CN, the PCRF holds user subscription information and decides on traffic policies. The PCEF/ADC/TDF gathers information on active applications and has the functionality to block or limit the data rate of certain traffic or applications. The eNB in the RAN has cell congestion information and has the functionality to prioritize or limit traffic belonging to a certain bearer. The communication between CN and RAN takes place in terms of QoS parameters for a bearer. These QoS parameters contain all information that the RAN has on how to differentiate traffic in the network. The CN, however, has no information on the congestion situation in the RAN and consequently decides on policies including QoS parameters independent on the congestion situation. The scope of this invention is an enhancement of the PCC architecture to allow an operator to specify different policies for different RAN congestion situations.

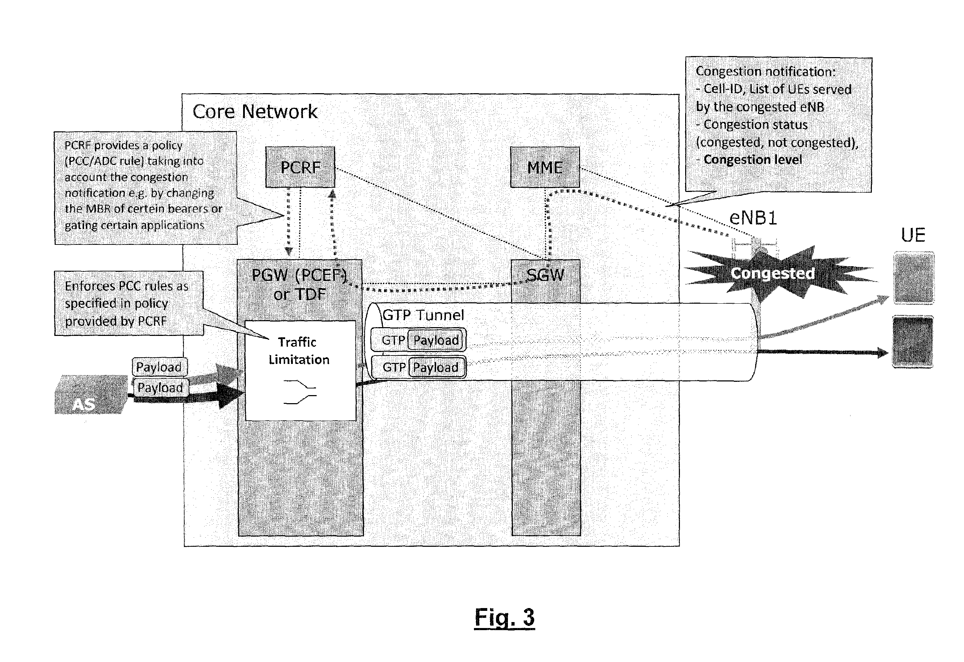

The related prior art comprises patent application documents US 2012/0257499 A1 and US 2012/0052866 A1, and patent document US 8,130,655 B2. The common approach among these prior art documents is to collect information about the cell load/congestion situation in the RAN. This information may include detailed data like the list of user equipments (UE) in a cell, the utilization of radio resources, the throughput per UE, the buffer level per user or per cell, etc. or it may contain a more abstract description derived from the detailed data, e.g., in terms of a binary cell congestion status (e.g., congestion, no congestion) or a congestion level (e.g. light, medium, high). The RAN sends this information to a policy function in the network. This congestion notification may, e.g., be implemented by extending the PCC/QoS framework and using GTP-C headers as described in EP 2512176 A1, or by using the operations and management plane. The policy function has information on subscriber data, subscriber usage, application usage, etc. or it at least has an interface to acquire this data. In the current 3GPP architecture, this function is the PCRF. This function uses the information on the RAN status to decide on policies that also take into account the information available at this policy function namely the above mentioned subscriber information. The policy function forwards the policy to the PCEF. The PCEF enforces policies either locally, e.g., in case of gating or rate limitation, or modifies the QoS attributes of bearers or sessions in which case also RAN becomes involved. Figure 3 illustrates the principles of operation of the previously described prior art. The eNB detects a change in the congestion situation and sends a notification to the PCRF. The PCRF receives the notification and may decide on new policies according to this information. It provides any changes in the policies to the PCEF that enforces the new policies either directly or requests a modification of the QoS parameters of affected bearers.

### BRIEF DESCRIPTION OF THE DRAWINGS

Figure 1 illustrates the principles of operation of the PCC/QoS architecture of a 3GPP network.
Figure 2 illustrates the location of functionalities and information in a 3GPP network.
Figure 3 illustrates the principles of operation of congestion mitigation and congestion-aware policy decisions at the PCRF as described in the prior art.
Figure 4 shows an example table that describes how to adapt the congestion mitigation level in response to a signalled congestion status.
Figure 5 illustrates the operation of the congestion-aware policy decision and enforcement at the PCEF.

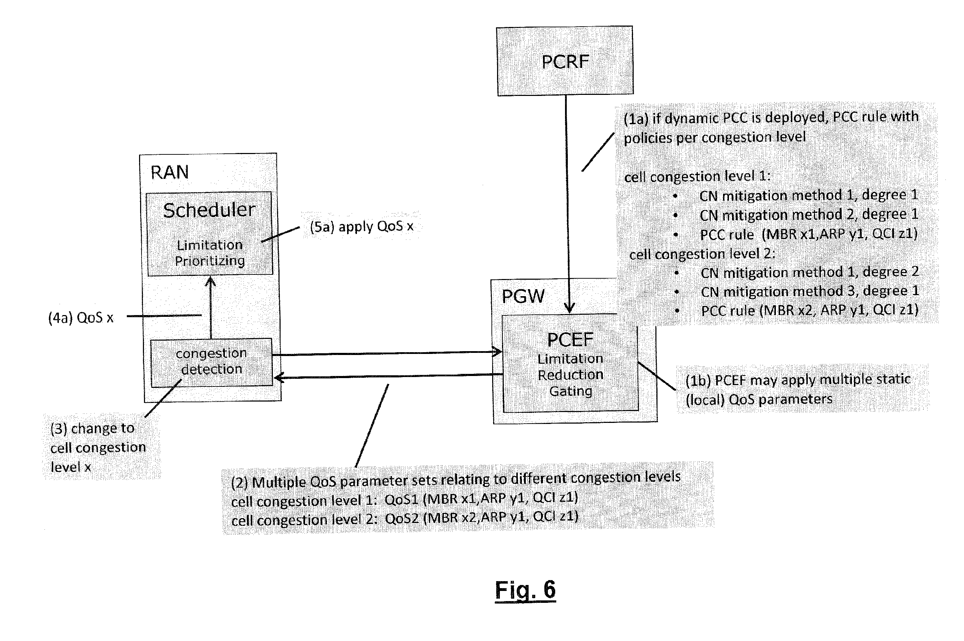

Figure 6 illustrates the operation of the congestion-aware policy decision and enforcement at the RAN.
Figure 7 shows an example of encoding a policy for traffic limitation taking into account the RAN congestion status.
Figure 8 shows an example message flow for transferring a policy for traffic limitation with a RAN congestion status from the PCRF to the PCEF enhanced with an ADC.
Figure 9 concerns an example of encoding a policy in the ADC rule for traffic limitation taking into account RAN congestion levels and shows in particular how to introduce a new RAN-Congestion-Management AVP into the ADC rule.
Figure 10 concerns an example of encoding a policy in the ADC rule for traffic limitation taking into account RAN congestion levels and shows in particular the contents in the new AVP with three MBR values for three different congestion levels.
Figure 11 shows an example signalling message flow for transferring a policy for traffic limitation with RAN congestion levels from the PCRF to the PCEF enhanced with ADC.
Figure 12 shows an example of encoding a policy in the ADC rule for applying different mitigation measures, taking into account RAN congestion levels.

### SUMMARY OF THE INVENTION

According to one embodiment there is provided a method for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, and further a policy and charging rules function (PCRF) module which is separate from said PGW, said method comprising the steps of: detecting a congestion status in said RAN, providing by said PCRF module one or more congestion mitigation policies which respectively define a plurality of congestion mitigation measures to execute in case of a congestion to said PCEF receiving and storing said one or more congestion mitigation policies at the PCEF, wherein the method is characterized by notifying said PCEF about said congestion status by said RAN, receiving said congestion status notification at said PCEF, wherein said one or more congestion mitigation policies provided to the PCEF by said PCRF module comprising congestion mitigation measures, said method further comprising: determining based on said plurality of congestion mitigation measures by said PCEF a congestion mitigation measure according to said congestion status notification and executing said determined congestion mitigation measure to thereby enforce said one or more congestion mitigation policies.

This method enables, in the case of congestion in the RAN, a timely and effective selection and application of congestion mitigation measures, thereby avoiding the overheads of frequent signalling between the PCRF and PCEF, since multiple congestion mitigation policies, comprising multiple congestion mitigation measures may be transferred at once and in advance of possible congestion occurring in the RAN. Moreover, the direct reception of congestion status notifications by the PCEF simplifies the signalling path when compared to the prior art, which involves an indirection through the PCEF, since the congestion status notification is, in the prior art, first signalled to the PCRF, which in the suite selects and provides one specific congestion mitigation policy to the PCEF in response to a concrete actual congestion situation in the RAN.

According to one embodiment, there is provided the method as described previously, wherein said one or more congestion mitigation policies respectively define which congestion mitigation measure is to be taken depending on said congestion status; or said one or more congestion mitigation policies respectively define only congestion mitigation measures as respective elements of said congestion mitigation policies, and said PCEF comprises a congestion mitigation engine implementing a selection mechanism for selecting one of said plurality of congestion mitigation measures, wherein said selection mechanism performs the selection of the congestion mitigation measure based on said congestion status, preferably also on further parameters reflecting the state of said network, said further parameters preferably including the currently executed congestion mitigation measure and/or the congestion mitigation measures performed in the past.

Such way of specifying one or more congestion mitigation policies, albeit compact and efficient, has the benefit that it enables the PCEF to either directly determine an appropriate congestion mitigation measure according to a congestion status or having a congestion mitigation engine comprised in the PCEF perform a selection of a congestion mitigation measure from the congestion mitigation policies based on said congestion status, preferably also on further parameters reflecting the state of said network, said further parameters preferably including the currently executed congestion mitigation measure and/or the congestion mitigation measures performed in the past.

According to one embodiment the method further provides said congestion status notification wherein a level of congestion in the RAN is specified, preferably specified as one of "congestion", "no congestion", or one of "low", "medium", "high" "; and/or wherein said plurality of congestion mitigation policies comprises a plurality of congestion mitigation measures and, either explicitly or implicitly by the order of said congestion mitigation measures, a plurality of congestion mitigation levels, wherein each of said mitigation measures is associated with one of the said congestion mitigation levels, said plurality of congestion mitigation levels being defined such that a higher congestion mitigation level corresponds to a higher effectiveness of its corresponding congestion mitigation measures.

Such specification and abstraction of a concrete congestion situation allows for a compact representation of congestion status information and thus efficient signalling of the congestion status to the PCEF. Moreover, the either explicitly or implicitly specified congestion mitigation levels allow to express the effectiveness of each congestion mitigation measure and thus support the efficient selection of an appropriate congestion mitigation measure in the PCEF.

According to one embodiment, there is provided the method as described previously, wherein the step of selecting a congestion mitigation measure from the plurality of provided congestion mitigation measures is performed by said congestion mitigation engine according to said congestion status notification and congestion status notifications received in the past.

The inclusion of past congestion information in the decision of selecting a current congestion mitigation measure may improve the effectiveness of the congestion mitigation overall. For example in a situation of lasting insistent but congestion at a moderate congestion level in the RAN, the method may escalate the mitigation measures, starting with possibly with less severe and continuing with possibly more severe and possibly more effective measures to cure the congestion situation. Such escalation may improve the effectiveness of the overall congestion mitigation mechanism while the same time mitigating a possible negative impact of congestion mitigation measures on the user experience.

According to one embodiment, there is provided the method as described previously, wherein said multiple congestion mitigation measures comprise congestion mitigation measures at different levels, said method further comprising, if a congestion mitigation measure is already executed when said congestion notification is received, determining a congestion mitigation measure at a higher level than the one already being executed as a congestion mitigation measure which is to be executed in response to receipt of said congestion notification.

The different levels, also referred to as congestion mitigation levels, have the benefit that they allow to categorize different congestion mitigation measures according to their effectiveness and possible impact on user experience, thus facilitating and possibly simplifying means for selecting an appropriate congestion mitigation measure that is adequate to cure the congestion given a current congestion information, i.e. congestion status and possibly a history of congestion information and further information that contribute to the selection decision.

According to one embodiment, there is provided the method as described previously, further comprising: providing at least a subset of said one or more congestion mitigation policies from said PCEF to said wireless base station, detecting said congestion status at said wireless base station, determining whether said congestion mitigation policies which have been forwarded to said wireless base station comprise one or more congestion mitigation measures which are to be executed in said wireless base station in case of the detected congestion status, and if necessary, executing said one or more congestion mitigation measures in said wireless base station.

This has the benefit, that also the base station may, similar to the PCEF, perform the selection of an appropriate congestion mitigation measure, with similar benefits regarding of reducing the signalling overheads between an entity that provides policies (in this case the PCEF) and an entity that enforces the policies (in this case the wireless base station). Moreover, since the wireless base station is comprised in the RAN, it is in an ideal situation to efficiently receive congestion status information and adapt the selection of congestion mitigation measure in a timely manner.

According to one embodiment, there is provided the method as described previously, wherein, if based on said detected congestion status the congestion mitigation policies, which have been forwarded to said base station, provide one or more congestion measures to be executed by said base station and provide no possible measures to be executed by said PCEF, refrain from forwarding said congestion status notification from said base station to said PCEF.

This has the benefit of reducing the resources consumption for transferring congestion status notifications by temporarily and selectively disabling the forwarding of congestion status notifications to the PCEF.

According to one embodiment, there is provided the method as described in the previous paragraph, wherein, if the congestion status exceeds a certain level and/or continues for a certain time, forwarding said congestion notification to the PCEF to enable the PCEF to take a congestion mitigation measure according to said congestion mitigation policies.

This has the benefit that in cases where congestion is such that performing congestion mitigation measures solely at the base station is not sufficiently effective to mitigate congestion in the RAN, further congestion mitigation measure may be executed at the PCEF, thus improving the effectiveness of the overall method for congestion mitigation.

According to one embodiment, there is provided the method as described previously, wherein said congestion mitigation policies take into account: user subscription information, traffic statistics, user or application specific information, or any combination thereof.

This has the effect that congestion mitigation measures can be effective while at the same time, a possible reduction of the service quality for specific users or applications caused by the execution of the congestion mitigation measures may be reduced, minimized, or avoided altogether. In one embodiment, for example, bearers of users with a premium subscription may be exempted from congestion mitigation measures that perform traffic reduction.

According to one embodiment, there is provided the method as described previously, wherein said congestion mitigation measures comprise: traffic prioritization, preferably by existing quality of service (QoS) parameters, traffic limitation, preferably by modifying the maximum bit rate (MBR) of QoS parameters, or traffic reduction, preferably by using compression or transcoding techniques, traffic gating, preferably by allowing or blocking traffic, or any combination thereof.

This has the effect that the selection of congestion mitigation measures may not merely mean to execute one type of congestion mitigation measures with different parameters, such as traffic limitation to different traffic rates, but that the selection of congestion mitigation measures may also comprise a choice or combination of different types of measures that may be synergetic and/or allow to optimize the effectiveness of the selected measures while at the same time minimizing the impact on perceived user service quality for the users.

According to one embodiment, there is provided a method for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, said method comprising the steps of: detecting a congestion status in said RAN, wherein said PCEF comprises a plurality of static and/or local congestion mitigation policies which respectively define a plurality of congestion mitigation measures to execute in case of a congestion, wherein the method is characterized by providing at least a subset of said plurality of congestion mitigation policies comprised by said PCEF to said wireless base station, determining based on said plurality of congestion mitigation measures by said base station a congestion mitigation measure according to said detected congestion status, and performing said determined congestion mitigation measure to thereby enforce said one or more congestion mitigation policies.

This has the benefit that the selection and enforcement of congestion mitigation policies and respectively the congestion mitigation measures comprised therein can occur at the wireless base station without involving interaction with the PCRF. Besides the economies in terms of resources for operating and communicating with the PCRF, the method permits also to perform congestion mitigation even during temporary unavailability of the PCRF.

According to one embodiment, there is provided the method as described in the previous paragraph, wherein said local and/or static congestion mitigation policies are QoS policies which are forwarded from said PCEF to said wireless base station.

This has the benefit that the provision and enforcement of the congestion mitigation measures in the base station of the RAN can occur entirely independent of the PCRF.

According to one embodiment, in case where a subset of policies is forwarded from the PCEF to the RAN, there is further performed a congestion mitigation as defined by one or more features of the other embodiments described before.

According to one embodiment, there is provided an apparatus for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, and further a policy and charging rules function (PCRF) module which is separate from said PGW, said apparatus comprising: A module for detecting a congestion status in said RAN, a module for providing by said PCRF module one or more congestion mitigation policies which define what congestion mitigation measure to execute in case of a congestion to said PCEF; a module for receiving and storing said one or more congestion mitigation policies at the PCEF, wherein the apparatus is further characterized by a module for notifying said PCEF about said congestion status by said RAN, a module for receiving said congestion status notification at said PCEF, wherein said congestion mitigation policies provided to the PCEF by said PCRF module comprise multiple congestion mitigation measures, said apparatus further comprising: a module for determining based on said one or more congestion mitigation policies by said PCEF a congestion mitigation measure according to said congestion status notification and a module for executing said determined congestion mitigation measure to thereby enforce said one or more congestion mitigation policies.

According to one embodiment, there is provided the apparatus as described in the previous paragraph, further comprising one or more modules for performing the steps of the method as defined in one of paragraphs above.

According to one embodiment, there is provided a computer program comprising computer program code which when being executed by a computer enables said computer to perform a method as defined in one of the previous paragraphs.

### DETAILED DESCRIPTION

At first some abbreviations which are used in the following will be explained.
- ADC: application detection and control
- AVP: attribute value pair
- AMBR: aggregate maximum bit rate
- CN: core network
- eNB: eNodeB (base station)
- GTP-C: GPRS tunneling protocol control
- IP-CAN: IP connectivity access network
- MBR: maximum bit rate
- MME: mobility management entity
- PCC: policy control and charging
- PCEF: policy and charging enforcement function
- PCRF: policy and charging rules function
- PGW: packet data network gateway
- QCI: QoS class indicator
- QoS: quality of service
- RAN: radio access network
- SGW: serving gateway
- TDF: traffic detection function

Then, for the sake of clarity, some of the terminology used in the claims and henceforth in this disclosure should be explicitly defined.

The term "rule", as used in the context of "PCC rule", "ADC rule" or "QoS rule", refers to a syntactic convention for formatting various control information for the purpose of processing and transferring such information between functional units of the PCC framework. The PCC framework specifies conventions according to which rules are specified, typically using sequences of attribute-value pairs (AVP). For example the ADC rule comprises in a certain order an optional rule name, an application identifier, flow status indicator, QoS information, etc. Rules are typically defined by the standard or extensions thereof.

The term "policy", as used in the context of "QoS policy" or "ADC policy", refers to information about a specific configuration, parameter or a behavior specified according to the format conventions of a corresponding rule. For example, an ADC policy is specified according to the conventions of an ADC rule. An ADC policy may specify, e.g., that the traffic belonging to a specific video streaming application AppA should be throttled to a specified bitrate RateB. Policies are preferably specified by operators or administrators of a mobile network. Note that one ADC policy may specify several applications and their respective maximum bitrates; hence one such ADC policy may comprise several (sub)-policies, i.e. one policy for each application type. In the present disclosure, if reference is made to a plurality, i.e. a set or subset, of policies, then it is immaterial, whether these policies are specified as one policy according to a rule that permits specification of (sub)-policies, or several individual policies.

The term "measure", as used in the context of "congestion mitigation measure", refers to an action that, when executed, affects the congestion. Examples of congestion mitigation measures are traffic prioritization, bandwidth limitation, traffic gating, and traffic reduction. A measure may be specified as part of a policy, for example for reducing congestion in the RAN or CN. For example, a QoS policy may specify a measure that the bandwidth of a bearer should be limited to a certain maximum bitrate.

The term "condition" refers to predicate that, when evaluated, results in a Boolean value. A condition may be specified as part of a policy. For example, an ADC policy may specify several different "congestion mitigation measures", each one to be applied under a certain condition, where the condition is specified in the same ADC policy. An example condition is the value of a congestion level, meaning that "if the value of the current congestion is equal to the value of the congestion level specified by the condition the condition evaluates to true otherwise false", hence the congestion mitigation measure corresponding to the condition would be executed or not.

The term "selection", as used in the context of "selecting a congestion mitigation measure", refers to choosing one from a plurality of such measures, preferably based on the evaluation of conditions associated with the measures, both of said measures and associated said conditions being specified by a policy.

The terms "enforcing" respectively "applying" a policy typically refer to evaluating conditions in a policy and, if applicable, executing measures specified by the policy.

The present invention relates to a method and an apparatus for controlling and mitigating congestion in a mobile network. The present invention enables an operator of a mobile network to apply different traffic handling policies for different congestion situations. A policy describes how to handle the traffic of a user by e.g. traffic prioritization, bandwidth limitation, traffic gating, or traffic reduction. A policy function, preferably embodied by the PCRF, provides policies for multiple congestion situations to an enforcement function, preferably embodied by the PCEF. In one embodiment, the enforcement function receives RAN congestion information from a congestion monitor and based on this information determines and enforces the appropriate policy.

Enforcing the policy may also involve modifying QoS parameters of already established bearers. In another embodiment, the PCEF defines QoS parameter sets for multiple congestion situations already when establishing a bearer. In this case, the congestion monitor may directly react to changes in the congestion situation and modify the currently active QoS parameters set of a bearer to the one specified for the current congestion situation without informing the CN.

One objective of this invention is similar to objectives of the previously described prior art, namely to allow an operator to specify policies that take into account different RAN congestion situations. However, this invention describes a more efficient way to achieve this objective, since it reduces the signalling load in particular during high congestion situations. Instead of providing congestion information to the PCRF, the PCRF provides extended rules for specifying policies which are to be applied thereby defining how to handle traffic in different congestion situations to the PCEF, and the PCEF decides, based on congestion information provided to it, which of the policies provided by the extended rules to enforce.

In the following, embodiments of the invention which make use of the proposed extended rules in a mobile network system are described. Moreover, the implementation of extensions of congestion mitigation rules/policies, which are used to be signalled over the signalling interfaces in mobile networks, are described in detail.

One implementation example of using extended rules by context-aware policy decision and enforcement at the PCEF is described in the following. In one embodiment the congestion-aware policy decision and enforcement takes place at the PCEF. The PCRF provides multiple PCC rules to the PCEF. These rules specify which policies the PCEF should apply in different congestion situations. In the following we refer to the policies as congestion mitigation measures. A specific policy comprises one or more congestion mitigation measures that are specified for every congestion mitigation level. A congestion mitigation level thereby may comprise one or more specific congestion mitigation measures as a "countermeasure" to be taken against congestion status, and there may be a plurality of congestion mitigation levels which respectively correspond to different sets of congestion mitigation measures which are different in their degree of effectiveness with which they affect a congestion status.

A policy may further comprise a definition of one or more conditions or a set of conditions which define in which congestion situation (which may be referred to as "congestion status" or congestion level") a certain congestion mitigation level should be applied. In a relatively simple embodiment there may be three types of congestion situations, the congestion levels low, medium, and high, and there may be three corresponding congestion mitigation levels 1, 2, and 3, where level 1 has low effectiveness, level 2 has medium effectiveness and level 3 as high effectiveness. The "conditions" comprised by the policies may then define that in case of congestion level being low congestion mitigation level 1 should be applied, in case of the congestion level being medium the congestion mitigation level 2 should be applied, and in case of congestion level 3 the congestion mitigation level 3 should be applied, where congestion mitigation levels 1 to three comprise different sets of congestion mitigation measures having - from level 1 to 3 - increasing effectiveness.

The congestion mitigation levels, however, do not necessarily have to exist in the same number as the congestion levels, the number of congestion mitigation levels may especially be higher than the number of congestion levels. Especially in such cases, but also in general the conditions which define which congestion mitigation measure should be taken in which congestion situation may be more complex than mapping just one of n congestion levels to a corresponding one of n congestion mitigation policies. Instead, e.g. the history of congestion mitigation measures taken before or the current congestion mitigation level may also be taken into account when deciding on a change of a congestion mitigation level depending on a current congestion level. Further embodiments which make use of such concepts will be described later in somewhat more detail.

A congestion monitoring function (CMF) located in the RAN continuously monitors the RAN congestion situation and provides information on the congestion situation. This information, referred to as congestion status, may be specified in one of the following formats:
● Binary: The CMF may notify onset and abatement of cell congestion.
● Level: The CMF may abstract the cell congestion situation to a cell congestion level and notify this cell congestion level. Examples could be no congestion, low congestion, medium congestion, high congestion or numerical values ranging from, e.g., -4 to 4 and describing the RAN load situation
● Detailed: The CMF may report detailed cell information like the resource utilization of the cell, the amount of buffered data, the number of users and cell throughput, per user or per cell packet delay, per user or per cell packet loss rate, etc.

The abstract cell congestion level may be determined by the CMF based on the detailed congestion information. The report sent from the CMF to the PCEF may either be per bearer or per cell. Furthermore, the report may or may not provide information to the PCEF to determine which users are served by which cell.

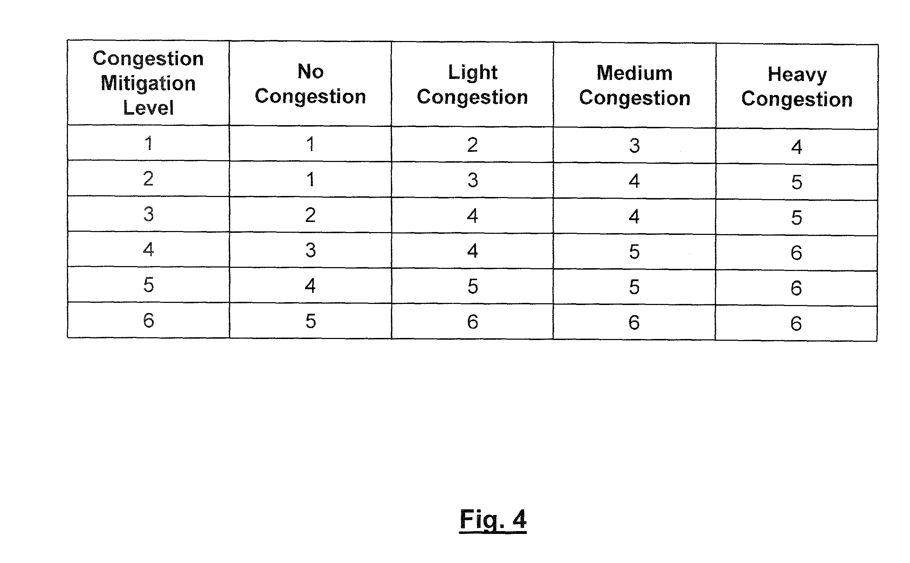

The PCEF receives the policies from the PCRF and RAN congestion information from the CMF. The PCEF uses the RAN congestion information to decide on the policy to enforce. The way how to decide on the policy rules depends on the available RAN congestion information and the format of the policy rules as follows:
- For binary congestion status information: The congestion mitigation engine may keep a congestion mitigation level per cell, per user, or per bearer and enforce the congestion mitigation policies according to the current congestion mitigation level and including all mitigation measures according to lower congestion mitigation levels. If congestion mitigation measures on different congestion mitigation levels are exclusive, the mitigation measure activated on the higher congestion mitigation level may prevail.
   At normal operation the policy for the lowest congestion mitigation level may be enforced (level 1 in Figure 4) which corresponds to the policies as they are in the current standard.
   At congestion onset signalled for a cell/user/bearer the congestion mitigation engine may increase the congestion mitigation level, preferably by one, and may enforce additional congestion mitigation measures. Also, the congestion mitigation engine may comprise two timers per cell/user/bearer, subsequently referred to as congestion timer and decongestion timer. At congestion onset, the congestion mitigation engine may start the congestion timer for the cell/user/bearer. If the decongestion timer is running at congestion onset it is stopped.
   If the congestion timer expires, the congestion mitigation engine may increase the congestion mitigation level, preferably by one, may enforce the additional congestion mitigation measures, and may restart the congestion timer for the cell/user/bearer. The expiration time may depend on the congestion mitigation level. At congestion abatement, the congestion mitigation engine may stop the congestion timer and start a decongestion timer. The expiration time of the timer may depend on the congestion mitigation level.
   If the decongestion timer expires, the congestion mitigation engine may reduce the congestion mitigation level and release the respective congestion mitigation measures. If the congestion mitigation level has not reached the lowest congestion mitigation level the decongestion timer may be restarted.
- For congestion status specified in as level: The congestion mitigation engine may keep a congestion mitigation level per cell, per user, or per bearer and may enforce the congestion mitigation policies according to the current congestion mitigation level and including all mitigation measures according to lower congestion mitigation levels. If congestion mitigation measures on different congestion mitigation levels are exclusive, the mitigation measure activated on the higher congestion mitigation level may prevail.
   It is important to distinguish between the congestion level, which represents the current congestion status of the RAN, and the congestion mitigation level, which is an internal state of the congestion mitigation engine, guiding the selection of congestion mitigation policies (and the corresponding congestion mitigation measures). In some embodiments, the congestion mitigation level may be equal to the most recently signalled congestion level, but in other embodiments, the congestion mitigation level may be determined according to a series of congestion levels signalled in the past, as described in the following with reference to Figure 4. If the congestion mitigation engine receives a congestion level per cell/user/bearer from the CMF, the CMF may adjust the congestion mitigation level. This adjustment may be made according to a table that specifies which congestion mitigation level to apply if a certain congestion level is reported in the state of a certain active congestion mitigation level. If no negative congestion levels are specified i.e. only congestion abatement or "no congestion" is notified, then the congestion mitigation engine may start a decongestion timer as described above for stepwise reducing the congestion mitigation level and releasing the congestion mitigation measures to the basic level (level 1 on Figure 4). Figure 4 shows an example table that describes how to adapt the congestion mitigation level. If e.g. the congestion mitigation engine is in level 1 and receives a "medium congestion" notification, the congestion mitigation level is changed to level 3 and the congestion mitigation engine enforces the respective policies, i.e. performs the corresponding congestion mitigation measures. If it next receives a "light congestion" notification, it remains on congestion mitigation level 4, and if it then receives multiple "no congestion" signals, the congestion mitigation level would be gradually reduced to congestion mitigation level 1. This kind of approach is defined by a set of "conditions" which specify under which circumstances taking into account the congestion level and further factures such as the current congestion mitigation level a new mitigation level is to be chosen. Such conditions may also be regarded as belonging to the "policies" which defined which congestion mitigation measure is to be taken in which congestion situation, and the conditions thereby may take into account not only the current congestion status but also its history, the current congestion mitigation level, and possibly even further parameters.
- For congestion status specified as detailed information: The congestion mitigation engine may keep the congestion mitigation level per cell, per user, or per bearer and may enforce the congestion mitigation policies according to the current congestion mitigation level and including all mitigation measures according to lower congestion mitigation levels. If congestion mitigation measures on different congestion mitigation levels are exclusive, the mitigation measure activated on the higher congestion mitigation level may prevail.
   If the congestion mitigation engine receives a congestion level per cell/user/bearer from the CMF, the congestion mitigation level may be adjusted.
   In one embodiment this adjustment may be made by determining a congestion level from the detailed congestion information in the PCEF. The PCEF may consider further information on the current traffic and used applications when deciding on the congestion mitigation level. The congestion mitigation level is then used when selecting congestion mitigation measures as described above.
   In another embodiment the table, an example of which is illustrated in Figure 4, that shows how to adjust the congestion mitigation level, may not be based on the congestion level but based on detailed congestion status information.

After determining the policy rule by the congestion mitigation engine taking into account RAN congestion information the policy rule may be enforced by the PCEF. The enforcement may comprise local actions like bandwidth limitation and gating. It may also comprise a change of QoS parameters that require the modification of a bearer. In this case the PCEF requests the change of a bearer from the RAN.

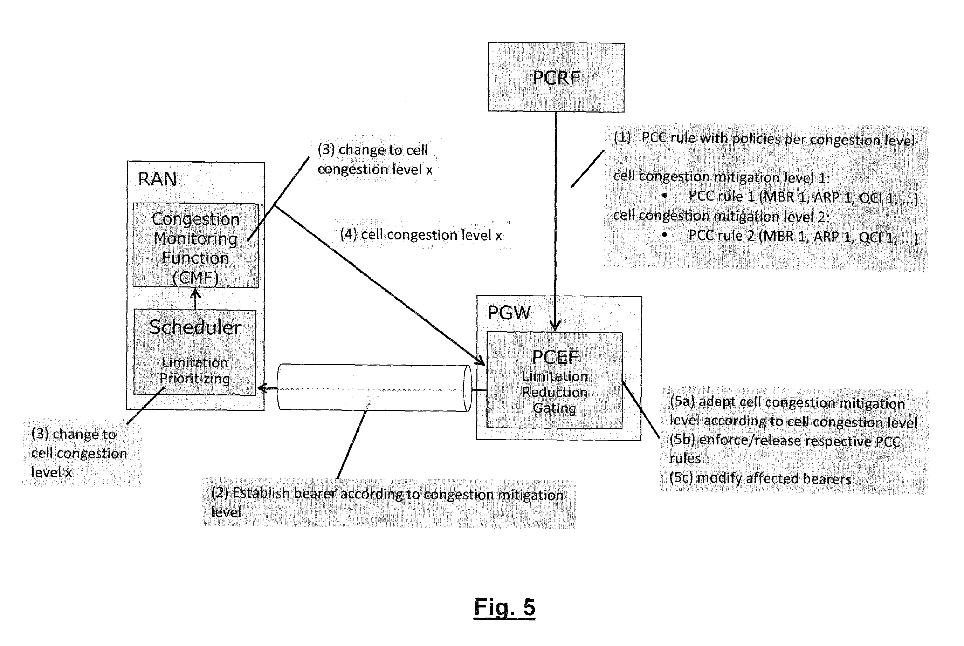

Figure 5 illustrates the operation of the congestion-aware policy decision and enforcement at the PCEF. The example considers that congestion notifications are received per bearer and contain the cell congestion level.

In the first step (1), the PCRF may provide rules for multiple congestion levels to the PCEF. This exchange may take place according to the 3GPP standard when a UE is attached to the system and a session or a bearer is created. In the second step (2), if the PCEF is aware of the congestion level of current cell of the user, the PCEF may establish bearers using the QoS parameters in the PCC rule according to the current cell congestion mitigation level. If the PCEF is not aware of the cell congestion mitigation level, it may establish bearers according to cell congestion mitigation level 1. The CMF may monitor the cell congestion situation and may detect, in step (3), a change in the cell level congestion level, and, for all bearers in the cell, may notify this change to the PCEF in step (4). For every received report, the PCEF may adapt, in step (5a), the cell congestion mitigation level according to the reported cell congestion level using a table as shown in Figure 4. The PCEF may enforce or release, in step (5b), PCC rules for the bearers according to the new cell congestion mitigation level. If required by the new PCC rules, the PCEF may modify the QoS parameters of the bearer.

The above description of the congestion mitigation engine referred to the PCEF. In a similar form, congestion mitigation may be also performed by referring to the ADC or the stand-alone TDF instead of the PCEF, and by applying ADC rules instead of PCC rules. In case of the stand-alone TDF, the PCEF may additionally forward the congestion notification to the TDF. In case of ADC/TDF the congestion mitigation measures also include the detection of application usage that is notified to the PCRF.

Another implementation example of using extended rules by congestion-aware policy decision and enforcement at the RAN is described in the following. In one embodiment the congestion-aware policy decision and enforcement takes place in the RAN. If dynamic PCC is deployed, the PCRF may provide multiple PCC rules to the PCEF. Otherwise, if static PCC is deployed, the PCEF may apply multiple static (local) QoS policies. The PCEF forwards the policies or a subset thereof, e.g., multiple QoS policies, to the RAN as part of the Dedicated Bearer Activation procedure according to the standard document 3GPP TS 29.274 V12.0.0. The QoS policy specifies what the RAN should apply in terms of congestion. However, the QoS policy as now available in the standard document 3GPP TS 29.274 V12.0.0 does not allow the RAN to apply a congestion mitigation technique based on the congestion level. For example, when the RAN is not congested, the RAN shall limit the data rate of the specific flow at maximum data rate level 1. Later when the RAN is medium congested, the RAN limits the specific flow or application with maximum data rate level 2, which is lower than maximum data rate level 1. If the RAN is heavily congested, the RAN limits the data rate of the specific flow/application to the lower maximum data rate level 3. In the following we refer to the policies as congestion mitigation measures. A specific policy contains one or many congestion mitigation measures, is specified for every congestion mitigation level.

A CMF is located in the RAN and has the same functionality as described above.. However, it may not be necessary that the CMF sends reports to the PCEF and the information collected by the CMF may be used locally in the RAN to decide on the policy rule to enforce. The way how to decide on the policy rules may depend on the available information and the format of the policy rules are done in the same way as described above.

After determining the policy rule by the CMF taking into account congestion information, the policy rule may be enforced by the RAN. The enforcement may comprise local actions like bandwidth limitation. It may also comprise a change of QoS parameters that require the modification of a bearer. However, other enforcement actions like traffic gating and traffic reduction (transcoding and compression) may not be feasible in the RAN.

Figure 5 illustrates the operation of the congestion-aware policy decision and enforcement at the RAN. In the first step (1), if dynamic PCC is deployed, the PCRF may provide rules for multiple congestion mitigation levels to the PCEF. Otherwise, the PCEF may apply multiple static (local) QoS policies. This exchange may take place according to the 3GPP standard when a UE is attached to the system and a session or a bearer is created. In the second step (2), the PCEF may forward multiple QoS policies per bearer for different congestion mitigation levels. One example of multiple QoS policies would be different MBR values per bearer per congestion mitigation level for both GBR and non-GBR bearers. Another example could be different AMBR values per user per congestion mitigation level for non-GBR bearers. The CMF may monitor the cell congestion situation and may detect, in step (3), a change in the cell congestion level and notifies for all bearers in the cell, in step (4), this change to the scheduler in the RAN. The RAN may adapt, in step (5), the cell congestion mitigation level according to the information received from the CMF about cell congestion level using a table, such as for example the one shown in Figure 4. The RAN may enforce or release QoS rules for bearers according to the new cell congestion mitigation level.

Another implementation example of using extended rules by congestion-aware policy decision and enforcement at both the RAN and the PCEF is described in the following. A described above, two different approaches are proposed: a congestion-aware policy decision and enforcement at the PCEF and a congestion-aware policy decision and enforcement at the RAN. Each has advantages and disadvantages. A good compromise is to have both multiple QoS parameters at the RAN and congestion signaling to PCEF in parallel.

In the combined approach, the PCRF provides PCC rules for multiple congestion mitigation levels in advance to the PCEF (as described previously), then PCEF signals the multiple QoS policies to the RAN (also as described previously). Once the RAN detects congestion; it applies available congestion mitigation mechanisms. Due to limited capabilities of the RAN, congestion mitigation measures at the RAN are usually limited to traffic prioritization. Hence CN-based congestion mitigation measures, such as traffic reduction, e.g., by transcoding or compression, or traffic gating cannot be applied at the RAN. In addition, mitigating congestion in the RAN cannot avoid congestion in the backhaul. One option to resolve these limitations is to categorize congestion mitigation levels to be handled in the RAN, in the CN, or both. For example, if a congestion mitigation level exceeds level3, the RAN may notify the CN about the congestion situation, and then actions may be taken in the CN. Another option is to monitor the backhaul congestion status and once the congestion exceeds a certain threshold, the CN may request to receive congestion notifications from the RAN. Upon congestion detection in the RAN, the RAN signals a congestion report to the PCEF, and the PCEF applies PCC rules.

In the following, the implementation of extensions of congestion mitigation rules/policies, i.e., the implementation of PCC/ADC/QoS rule extensions for congestion mitigation level based mitigation measures, are described in detail.

In one embodiment, there are PCC/ADC/QoS rule extensions for the interface between the PCRF and the PCEF. In the following, it is described how to encode the policies that describe how to handle traffic in different congestion situations. Due to the fact that there are different ways of mitigating RAN user plane congestion at the eNB, such rules extension can thus be implemented in different ways as described in the following.

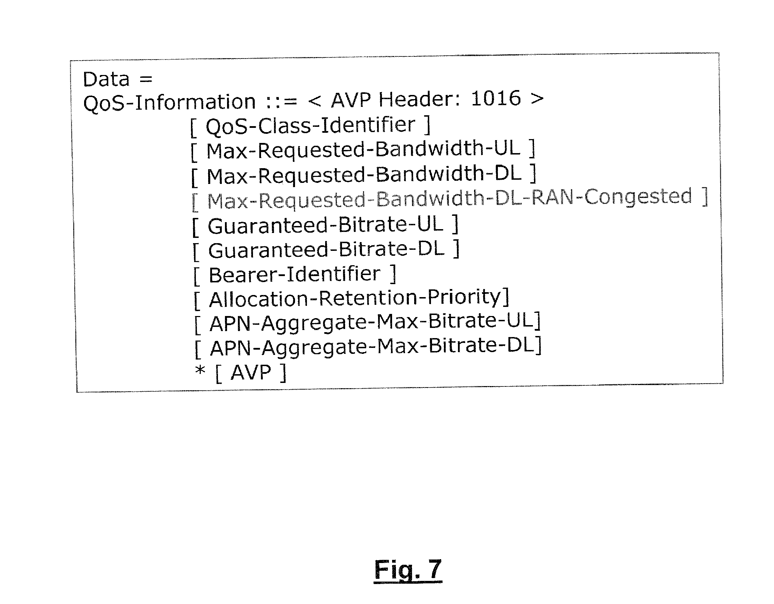

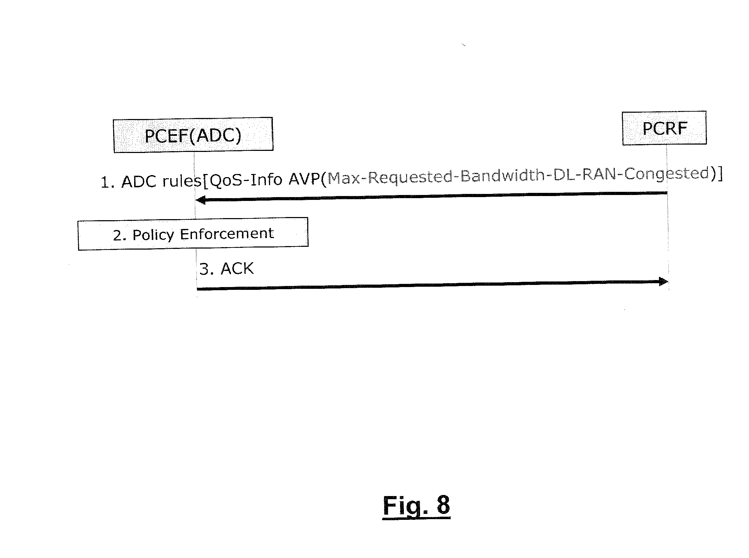

First, rule extension for traffic limitation based on RAN congestion status (congested or not congested) are described.
o Based on the PCC/ADC/QoS rules as specified in the standard documents 3GPP TS 23.203 V12.0.0 and 3GPP TS 29.212 V12.0.0, the information of how to limit specific traffic by taking into account congestion status (congested or not congested) may be encoded, for example, in the "QoS-information AVP" by introducing a new attribute-value pair (AVP) called
   "Max-Requested-Bandwidth-DL-RAN-Congested" as depicted in Figure 7. This new AVP may be used to carry information about different MBR, depending on the RAN congestion. Whereas the existing AVP
   "Max-Requested-Bandwidth-DL" (already standardized) is used for setting MBR in case RAN is not congested. Figure 7 shows an example of encoding a policy for traffic limitation taking into account the RAN congestion status.
o Figure 8 shows a signalling message flow example of how the PCRF may transfer the policy to the PCEF enhanced with the ADC by using the ADC rules message. In the 3GPP architecture, this is considered as Gx interface. In case a standalone for traffic detection (TDF) is used instead of a PCEF enhanced with ADC, the PCRF provides ADC rules to the TDF with the same newly introduced AVP "Max-Requested-Bandwidth-DL-RAN-Congested",

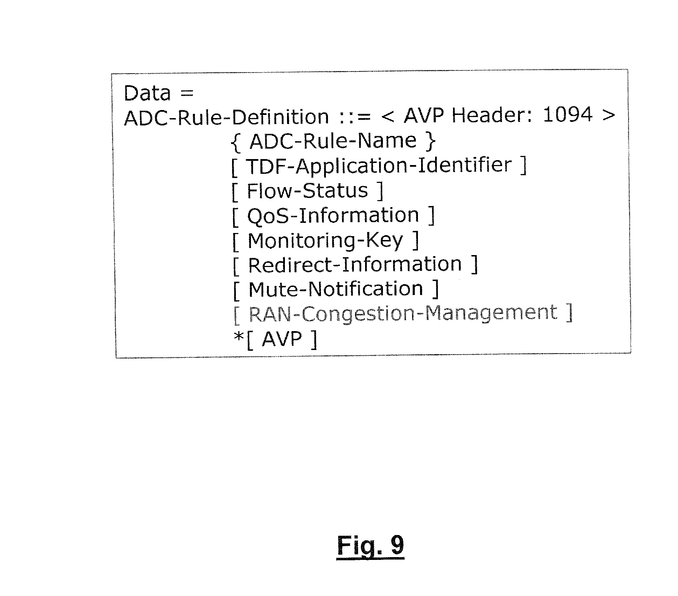

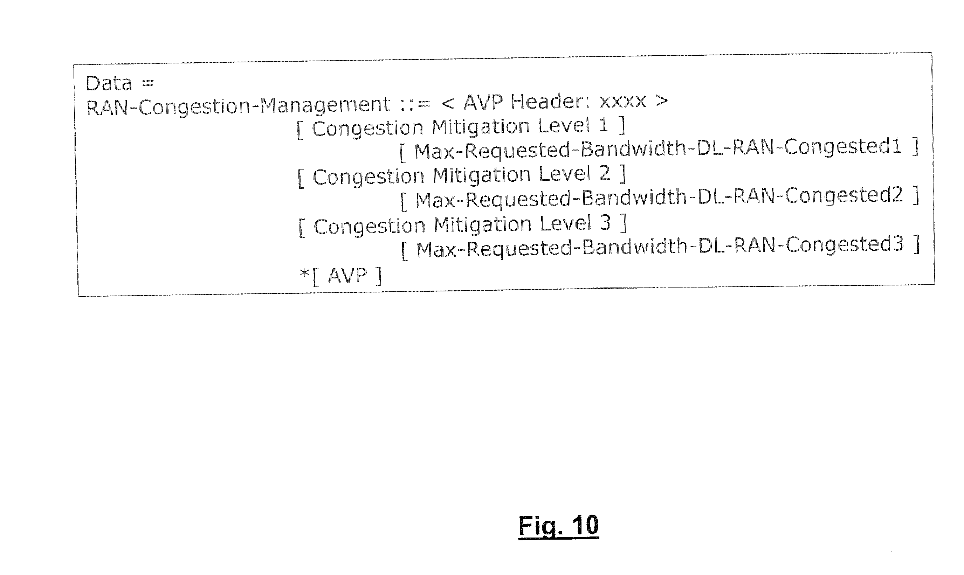

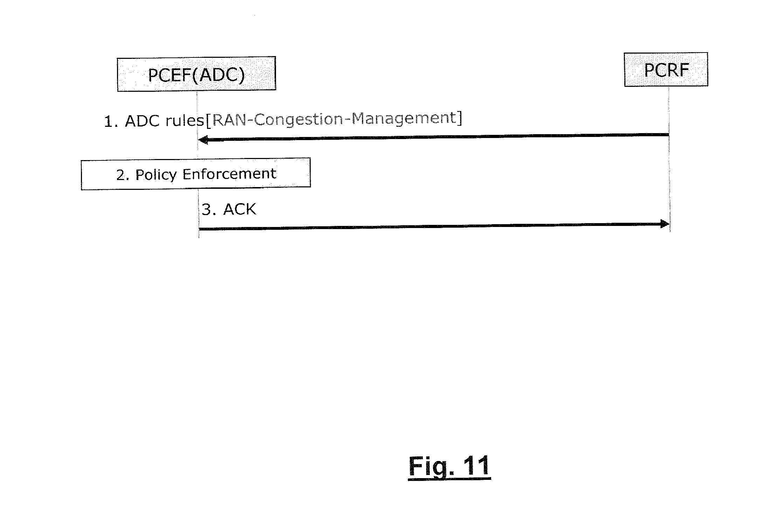

Second, rule extensions for traffic limitation based on RAN congestion level (light/medium/heavy) are described.
o Based on the PCC/ADC/QoS rules as specified in the standard documents 3GPP TS 23.203 V12.0.0 and 3GPP TS 29.212 V12.0.0, the information of how to limit specific traffic by taking into account congestion level (light/medium/heavy or level1/level2/level3) can be encoded, for example, in the "ADC-Rule-Definition AVP" by introducing a new AVP called "RAN-Congestion-Management" as shown in Figures 9 and 10. This new AVP contains information of how to apply different mitigation measures according to different RAN congestion levels. Figure 9 shows in particular how to introduce a new RAN-Congestion Management AVP into the ADC rule. Figure 10 shows in particular the contents in the new AVP with three MBR values for three different congestion levels.
o Figure 11 shows an example signalling message flow example of how the PCRF transfers a policy for traffic limitation with RAN congestion level to the PCEF enhanced with the ADC by using the ADC rules message. In 3GPP architecture, this is considered as Gx interface. In case a standalone traffic detection (TDF) is used, instead of having a PCEF enhanced with ADC, the PCRF provides ADC rules to the TDF with the same newly introduced AVP "RAN-Congestion-Management".

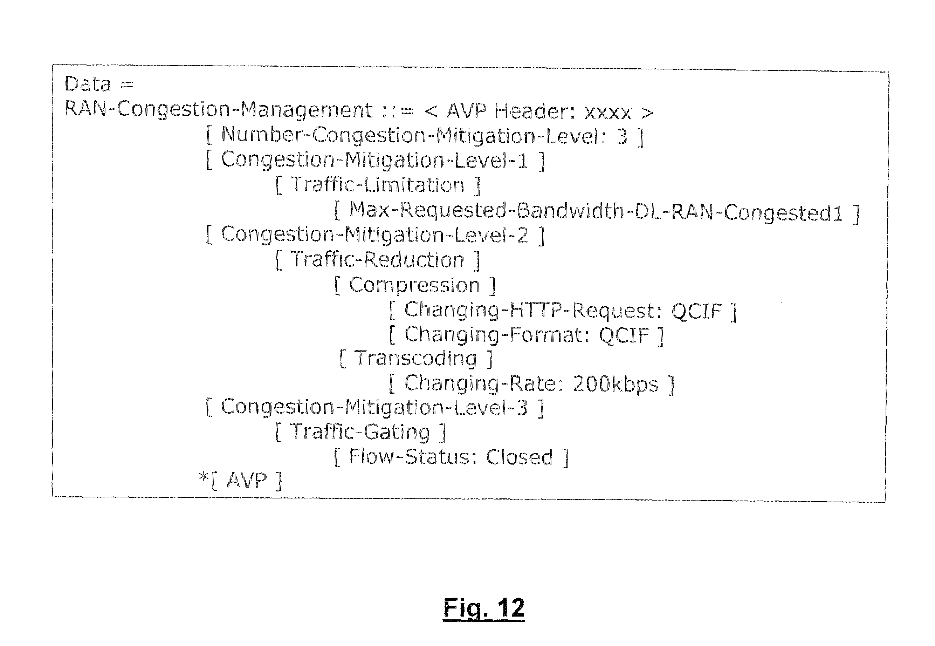

Third, rule extensions for different mitigation measures with RAN congestion level (light/medium/heavy) are described.
o Figure 12 shows an example of encoding a policy in the ADC rule for applying different mitigation measures, taking into account a RAN congestion level. Rather than applying the same mitigation measure for different congestion levels, an operator may also apply different mitigation measures (e.g., traffic gating, traffic limitation, traffic reduction) dependent on cell load situation. The new AVP "RAN-Congestion-Management" previously discussed for traffic limitation with different congestion levels can be used. But instead of applying traffic limitations with different maximum bit rates, in this case, the content contains different congestion mitigation measure as shown in Figure 12. In this example, when the congestion at the RAN is at level 1, the traffic limitation with a certain maximum bit rate is applied. When the RAN congestion level is 2, traffic reduction technique such as compression or transcoding is applied instead. In case, the RAN reaches the maximum level of congestion 3, traffic gating or blocking the specific traffic will be applied.
o The signalling message flow for transferring this is the same as the flow shown in Figure 11.

In another embodiment, there are rule extensions for the interface between the PGW and the eNodeB (through the SGW and the MME).

As mentioned previously, the policies available at the PCEF or a subset thereof, e.g. QoS policies, may be forwarded to the RAN, e.g. the eNodeB. Note that the policies available at the PCEF can be either signalled from the PCRF (in case of dynamic policies) or installed in advance (in case of static policies). To convey the policies or a subset thereof, e.g. QoS policies, to the RAN, e.g. the eNodeB, one can, for example, use the payload of the GTP-C signalling as a transport mean.

The above described embodiments have advantages and disadvantages over the techniques for traffic mitigation known from the prior art. Those advantages will be evaluated and discussed in the following:

Referring to one embodiment where the PCRF provides multiple PCC rules to the PCEF and the congestion-aware policy decision and enforcement takes place at the PCEF (PCC enhancement):
By forwarding the policy or rule on how to handle traffic for different situations of cell load in advance, an advantage of the embodiment may be that the number of signaling exchanged between the PCRF and the PCEF is reduced. In particular, when a CN-based mitigation measure is to be performed due to congestion at the RAN, the PCEF, enhanced with the ADC or even the TDF, may immediately apply the rules available without informing the PCRF about the congestion and asking the PCRF to provide rules/policies to be enforced.

However, the disadvantage may be that there may be more information to be conveyed for the rule that the PCEF may have to apply depending on the congestion situation of the RAN.

Referring to one embodiment where the PCRF provides multiple PCC rules to the PCEF, the PCEF forwards the multiple QoS policies to the RAN, and the congestion-aware policy decision and enforcement takes place in the RAN (QoS parameter enhancement):

Congestion mitigation for multiple congestion mitigation levels only in the RAN has the following advantages: First, there may be no feedback delay, because there may be no need to inform the core network about congestion and the RAN may take actions directly. Second, there may be less signaling from the RAN to the CN, because there may be no need to notify the core network about congestion in the RAN.

However, dealing with congestion only in the RAN may be insufficient: First, there may be no solution provided for handling backhaul congestion. Second, signaling the rules in advance from the PCEF to the RAN may introduce more traffic. Third, the RAN may have no capabilities to apply all mechanisms of congestion mitigation (e.g., transcoding, compression).

Referring to one embodiment where the PCRF provides PCC rules for multiple congestion mitigation levels in advance to the PCEF, the PCEF signals the multiple QoS policies to the RAN, and the congestion-aware policy decision and enforcement takes place in parallel at the PCEF (PCC enhancement) and in the RAN (QoS parameter enhancement):

Having multiple QoS parameters at the RAN and congestion signalling to PCEF in parallel may solve the problem of backhaul congestion and the lack of RAN capabilities to apply traffic reduction mechanisms.

However, it may introduce more signaling between the RAN and the CN during a congestion notification process.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity or a combination of network entities such as a router, a server, or any module or any othe entity acting in the network.

## Claims

1. A method for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, and further a policy and charging rules function (PCRF) module which is separate from said PGW, said method comprising the steps of:
detecting a congestion status in said RAN,
providing by said PCRF module one or more congestion mitigation policies which respectively define a plurality of congestion mitigation measures to execute in case of a congestion to said PCEF,
receiving and storing said one or more congestion mitigation policies at the PCEF, wherein the method is **characterized by**
notifying said PCEF about said congestion status by said RAN,
receiving said congestion status notification at said PCEF, wherein
said one or more congestion mitigation policies provided to the PCEF by said PCRF module comprising congestion mitigation measures, said method further comprising:
determining based on said plurality of congestion mitigation measures by said PCEF a congestion mitigation measure according to said congestion status notification and
executing said determined congestion mitigation measure to thereby enforce said one or more congestion mitigation policies.

2. The method of claim 1, wherein
said one or more congestion mitigation policies respectively define which congestion mitigation measure is to be taken depending on said congestion status; or
said one or more congestion mitigation policies respectively define only congestion mitigation measures as respective elements of said congestion mitigation policies, and said PCEF comprises
a congestion mitigation engine implementing a selection mechanism for selecting one of said plurality of congestion mitigation measures, wherein said selection mechanism performs the selection of the congestion mitigation measure based on said congestion status, preferably also on further parameters reflecting the state of said network, said further parameters preferably including the currently executed congestion mitigation measure and/or the congestion mitigation measures performed in the past.

3. The method according to claim 1, wherein said congestion status notification specifies a level of congestion in the RAN, preferably specified as one of "congestion", "no congestion", or one of "low", "medium", "high"; and/or
wherein said plurality of congestion mitigation policies comprises a plurality of congestion mitigation measures and, either explicitly or implicitly by the order of said congestion mitigation measures, a plurality of congestion mitigation levels,
wherein each of said mitigation measures is associated with one of the said congestion mitigation levels, said plurality of congestion mitigation levels being defined such that a higher congestion mitigation level corresponds to a higher effectiveness of its corresponding congestion mitigation measures.

4. The method according to one of the preceding claims, wherein the step of selecting a congestion mitigation measure from the plurality of provided congestion mitigation measures is performed by said congestion mitigation engine according to said congestion status notification and congestion status notifications received in the past.

5. The method of one of the preceding claims, wherein said multiple congestion mitigation measures comprise congestion mitigation measures at different levels, said method further comprising:
if a congestion mitigation measure is already executed when said congestion notification is received, determining a congestion mitigation measure at a higher level than the one already being executed as a congestion mitigation measure which is to be executed in response to receipt of said congestion notification.

6. The method according to one of the preceding claims, further comprising:
providing at least a subset of said one or more congestion mitigation policies from said PCEF to said wireless base station,
detecting said congestion status at said wireless base station,
determining whether said congestion mitigation policies which have been forwarded to said wireless base station comprise one or more congestion mitigation measures which are to be executed in said wireless base station in case of the detected congestion status, and
if necessary, executing said one or more congestion mitigation measures in said wireless base station.

7. The method of claim 6, wherein, if based on said detected congestion status the congestion mitigation policies, which have been forwarded to said base station, provide one or more congestion measures to be executed by said base station and provide no possible measures to be executed by said PCEF, refrain from forwarding said congestion status notification from said base station to said PCEF.

8. The method of claim 7, further comprising:
If the congestion status exceeds a certain level and/or continues for a certain time, forwarding said congestion notification to the PCEF to enable the PCEF to take a congestion mitigation measure according to said congestion mitigation policies.

9. The method according to one of the preceding claims, wherein said congestion mitigation policies take into account:
user subscription information,
traffic statistics,
user or application specific information, or
any combination thereof.

10. The method according to one of the preceding claims, wherein said congestion mitigation measures comprise:
traffic prioritization, preferably by existing quality of service (QoS) parameters,
traffic limitation, preferably by modifying the maximum bit rate (MBR) of QoS parameters, or
traffic reduction, preferably by using compression or transcoding techniques,
traffic gating, preferably by allowing or blocking traffic, or
any combination thereof.

11. A method for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, said method comprising the steps of:
detecting a congestion status in said RAN, wherein
said PCEF comprises a plurality of static and/or local congestion mitigation policies which respectively define a plurality of congestion mitigation measures to execute in case of a congestion, wherein the method is **characterized by**
providing at least a subset of said plurality of congestion mitigation policies comprised by said PCEF to said wireless base station,
determining based on said plurality of congestion mitigation measures by said base station a congestion mitigation measure according to said detected congestion status, and
performing said determined congestion mitigation measure to thereby enforce said one or more congestion mitigation policies.

12. The method of claim 11, wherein said local and/or static congestion mitigation policies are QoS policies which are forwarded from said PCEF to said wireless base station.

13. The method of claim 11 or 12, further comprising the features as additionally defined in one of claims 2 to 10.

14. An apparatus for performing congestion mitigation in a mobile communication network, comprising a core network and a radio access network (RAN), said RAN comprising a wireless base station being an access point that can be commonly shared among multiple user equipments (UE), said core network being a network that is operated by a network operator and comprising a packet gateway (PGW) which comprises a policy and charging enforcement function (PCEF) module, and further a policy and charging rules function (PCRF) module which is separate from said PGW, said apparatus comprising:
A module for detecting a congestion status in said RAN,
a module for providing by said PCRF module one or more congestion mitigation policies which define what congestion mitigation measure to execute in case of a congestion to said PCEF;
a module for receiving and storing said one or more congestion mitigation policies at the PCEF,
wherein the apparatus is further **characterized by**
a module for notifying said PCEF about said congestion status by said RAN,
a module for receiving said congestion status notification at said PCEF, wherein said congestion mitigation policies provided to the PCEF by said PCRF module comprise multiple congestion mitigation measures, said apparatus further comprising:
a module for determining based on said one or more congestion mitigation policies by said PCEF a congestion mitigation measure according to said congestion status notification and
a module for executing said determined congestion mitigation measure to thereby enforce said one or more congestion mitigation policies.

15. The apparatus of claim 14, further comprising:
One or more modules for performing the steps as defined in one of claims 2 to 10.
